# FASCICULE DE BREVET EUROPEEN

(11) **EP 1 779 635 B1**
(45) Date de publication et mention de la délivrance du brevet: **05.03.2008**
(21) Numéro de dépôt: 05796241.7
(22) Date de dépôt: 05.08.2005
(51) Int. Cl.: H04L 29/06

(54) **PROCEDE D'ATTRIBUTION DE CERTIFICAT D'AUTHENTIFICATION ET INFRASTRUCTURE D'ATTRIBUTION DE CERTIFICAT**
VERFAHREN ZUR ZUWEISUNG EINES AUTHENTIFIZIERUNGSZERTIFIKATS UND INFRASTRUKTUR ZUR ZUWEISUNG EINES ZERTIFIKATS
METHOD FOR ASSIGNING AN AUTHENTICATION CERTIFICATE AND INFRASTRUCTURE FOR ASSIGNING A CERTIFICATE

(30) Priorité: 19.08.2004 FR 0408992
(43) Date de publication de la demande: 02.05.2007
(73) Titulaire: France Télécom, 75015 Paris (FR)
(72) Inventeur: HOUSSIER, Loïc, F-94140 Alfortville (FR); FRISCH, Laurent, F-75013 Paris (FR); ARDITTI, David, F-92140 Clamart (FR)
(74) Mandataire: Hassine, Albert
(86) Numéro de dépôt international: PCT/FR2005/002040
(87) Numéro de publication internationale: WO 2006/021665

(56) Documents cités:
- US-A1- 2002 108 042
- US-A1- 2002 194 471
- ADAMS C., LLOYD S.: "Understanding PKI, Concepts, Standards, and Deployment Considerations" 2003, ADDISON-WESLEY , BOSTON , XP002316632 page 85 - page 87 page 89 - page 94
- ADAMS C. ET AL: "Internet X.509 Public Key Infrastructure Certificate Management Protocols" IETF, RFC 2510, mars 1999 (1999-03), XP015008293

## Description

L'invention se rapporte aux infrastructures de gestion de clés pour des systèmes informatiques sur réseau ouvert. Plus particulièrement, l'invention se rapporte à un procédé d'attribution de certificat ainsi qu'à un système qui permet d'attribuer un certificat selon le procédé.

Dans la présente invention, ce qui est appelé certificat doit être compris comme le certificat permettant de valider une clé cryptographique utilisée sur un réseau informatique ouvert. A titre d'exemple, un standard communément utilisé sur Internet pour les infrastructures de gestion de clé publique, de certificat et de liste de révocation de certificat est connue sous le nom de X.509 et plus particulièrement X.509v3 défini dans la RFC3280 (Request For Comment n° 3280) publiée par l'IETF (Internet Engineering Task Force). Le certificat est un objet comportant, entre autres, une clé publique à certifier, l'identité de son possesseur, une période de validité, une liste des droits d'utilisation de la clé et une signature cryptographique de ces données réalisées à l'aide de la clé publique d'une autorité de certification émettrice du certificat.

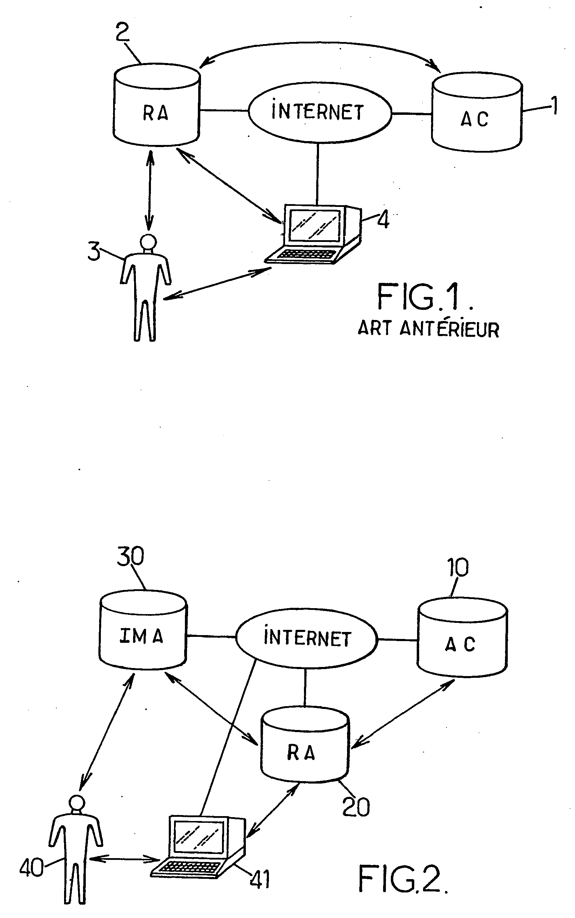

On appelle communément infrastructure à clé publique, ci-après PKI (de l'anglais Public Key lnfrastructure), une plate forme de gestion des certificats. La PKI a pour rôle non seulement de créer les certificats mais aussi de gérer leur validité, c'est à dire leur révocation et leur renouvellement. La figure 1 montre un exemple de PKI selon l'état de la technique. La PKI comprend principalement une autorité de certification (AC) matérialisée par un serveur de certificat 1, et une autorité d'enregistrement (RA) matérialisée par un serveur d'enregistrement 2. Le serveur de certificat 1 et le serveur d'enregistrement 2 sont par exemple reliés entre eux par Internet, et communiquent de manière sécurisée.

L'autorité de certification est un organisme reconnu comme étant compétent et de confiance pour délivrer et gérer des certificats ainsi que pour en assurer la validité. Lors de la délivrance d'un certificat, l'autorité de certification calcule une clé publique et une clé privée pour l'attribuer à un demandeur. La clé privée est ensuite fournie au demandeur avec le certificat afin que celui-ci puisse l'utiliser comme clé de signature de message ou clé d'accès à des services WEB sécurisés ou pour d'autres applications nécessitant un accès sécurisé. Lors d'une utilisation de la clé privée, l'autorité de certification sera sollicitée pour vérifier la validité de cette clé et des différentes données concernant le certificat, notamment sa validité et son activation ou sa révocation.

L'autorité d'enregistrement sert à établir une requête de certificat auprès de l'autorité de certification pour un demandeur de certificat. L'autorité d'enregistrement doit établir une requête de certificat complète dans laquelle différentes informations vont être envoyées en fonction du certificat demandé. Pour les certificats nécessitant un niveau de sécurité élevé, l'autorité d'enregistrement est chargée de vérifier les informations fournies par le demandeur concernant son identité et de vérifier si celui-ci est autorisé à requérir un tel certificat comportant la liste d'attribut demandé dans le certificat.

Actuellement, lorsqu'un demandeur 3 requiert un certificat auprès du serveur d'enregistrement 2 par l'intermédiaire d'un terminal 4 également connecté à Internet, l'autorité d'enregistrement peut lui demander soit de se déplacer pour vérifier de visu certaines informations, soit d'envoyer par courrier classique des pièces justificatives de son identité. Cette méthode relativement fiable présente cependant quelques inconvénients :
- l'émission d'une requête de demande de certificat par l'autorité d'enregistrement auprès de l'autorité de contrôle est soumise à la vérification de l'identité de la personne, cela peut nécessiter un délai dans la délivrance lorsque la personne demanderesse doit se déplacer ou envoyer des justificatifs pour prouver son identité;
- un demandeur souhaitant obtenir plusieurs certificats correspondant à différents PKI, doit effectuer son enregistrement auprès de différentes autorités d'enregistrement et renouveler systématiquement les opérations visant à prouver son identité bien que celle-ci n'ait pas changée ;
- les vérifications sur l'identité de la personne demanderesse de certificat doivent nécessairement se faire par l'intermédiaire d'un opérateur et ne permettent pas à une autorité d'enregistrement de se contenter d'un simple serveur centralisant les données.

L'invention vise à supprimer les inconvénients cités précédemment. Selon l'invention, un pré-enregistrement de l'identité de la personne demanderesse est réalisé par une entité tierce afin que, l'autorité d'enregistrement puisse obtenir des informations certifiées sur l'identité du demandeur. Ainsi, lorsqu'un demandeur requiert un certificat auprès du serveur d'enregistrement, le serveur d'enregistrement vérifie des informations auprès d'un serveur d'identité préalablement renseigné sur l'identité du demandeur. Grâce à l'utilisation d'un identifiant permettant d'obtenir des informations d'identité certifiées auprès d'un serveur d'identité, le serveur d'enregistrement peut effectuer la requête plus rapidement en allant vérifier la validité et éventuellement compléter, auprès du serveur d'identité, les informations requises sur l'identité et de manière certifiée, pour l'obtention d'un nouveau certificat. Un demandeur n'a besoin que de s'enregistrer qu'une seule fois auprès d'une autorité de gestion d'identité pour produire son identité auprès d'une pluralité de serveurs d'enregistrement. Egalement, l'autorité d'enregistrement n'a plus besoin de vérifier systématiquement des informations d'identité vérifiées une fois pour toute par l'autorité de gestion d'identité.

Ainsi, l'invention est un procédé d'attribution de certificat électronique dans une infrastructure d'attribution de certificat distribuée dans un réseau, l'infrastructure incluant au moins un serveur de certificat, un serveur d'identité et un serveur d'enregistrement reliés au réseau. Préalablement à une requête de demande de certificat, des informations relatives à l'identité d'un demandeur de certificat sont stockées dans le serveur d'identité, les informations d'identité étant accessibles par l'intermédiaire d'un identifiant. Un demandeur requiert un certificat auprès du serveur d'enregistrement. L'identifiant est envoyé au serveur d'identité. Après vérification de l'identifiant, le serveur d'identité envoie l'identité préalablement enregistrée du demandeur, ladite identité étant fournie au serveur d'enregistrement. Après réception de l'identité, le serveur d'enregistrement envoie une requête de certificat incluant l'identité du demandeur au serveur de certificat. Le serveur de certificat envoie le certificat à destination du demandeur.

Préférentiellement, le serveur d'enregistrement demande au demandeur son identifiant, afin de l'envoyer au serveur d'identité. Après vérification de l'identifiant, le serveur d'identité envoie au serveur d'enregistrement l'identité préalablement enregistrée du demandeur au serveur d'enregistrement (20). Le serveur de certificat envoie le certificat au serveur d'enregistrement. Le serveur d'enregistrement fournit le certificat au demandeur.

Selon différents modes de réalisation, l'identifiant peut être un identifiant anonyme. L'identifiant peut être lui-même un certificat. L'identifiant peut être accompagné d'un moyen de vérification. Le moyen de vérification peut être fourni par le demandeur au serveur d'enregistrement qui le fournit au serveur d'identité, et le serveur d'identité renvoie l'identité au serveur d'enregistrement uniquement si le moyen de vérification valide l'identifiant. Le moyen de vérification peut être un certificat vérifié par le serveur d'enregistrement.

Selon une variante, plusieurs serveurs d'identité sont reliés au réseau, chaque serveur comportant des informations d'identité complémentaires enregistrées préalablement à une requête de demande de certificat, les informations d'identité étant accessibles par l'intermédiaire d'un identifiant propre à chaque serveur d'identité. Le serveur d'enregistrement récupère les informations d'identité des différents serveurs d'identité afin de reconstituer une identité complète avant de l'envoyer au serveur de certificat.

L'invention est aussi un produit programme d'ordinateur comprenant des instructions pour mettre en oeuvre le procédé lors d'une exécution par des moyens de traitement mettant en oeuvre le procédé.

Egalement, l'invention porte sur un support d'enregistrement lisible par ordinateur, qui comporte un programme d'ordinateur mettant en oeuvre le procédé lorsque ledit programme est exécuté par des moyens de traitement mettant en oeuvre le procédé.

Selon un autre aspect, l'invention est une infrastructure d'attribution de certificat sur un réseau informatique. L'infrastructure comporte au moins un serveur de certificat d'authentification relié au réseau et apte à fournir un certificat électronique pour un demandeur, pour une durée donnée et pour un objet défini, le certificat étant délivré après la réception d'une identité d'un demandeur; un serveur d'identité relié au réseau, le serveur d'identité contenant des informations relatives à l'identité d'un demandeur de certificat, le serveur d'identité étant apte à fournir, après réception d'un identifiant, l'identité préalablement enregistrée du demandeur ; un serveur d'enregistrement relié au réseau et apte à requérir les informations d'identité relatives au demandeur auprès du serveur d'identité, suite à une requête de certificat d'un demandeur, puis à envoyer une requête de certificat au serveur de certificat incluant les informations d'identité du demandeur.

Préférentiellement, le serveur d'identité est apte à vérifier la validité de l'identifiant afin de renvoyer l'identité au serveur d'enregistrement uniquement si l'identifiant est valide.

Selon une variante, plusieurs serveurs d'identités sont reliés au réseau, chaque serveur comportant des informations d'identité complémentaires enregistrées préalablement à une requête de demande de certificat, les informations d'identité étant accessible par l'intermédiaire d'un identifiant propre à chaque serveur d'identité. Le serveur d'enregistrement est apte à récupérer les informations d'identité des différents serveurs d'identité afin de reconstituer une identité complète avant de l'envoyer au serveur de certificat.

L'invention sera mieux comprise et d'autres particularités et avantages apparaîtront à la lecture de la description qui va suivre, la description faisant référence aux figures annexées parmi lesquelles :
la figure 1 représente un exemple d'infrastructure de gestion de clé publique selon l'état de la technique,
la figure 2 représente un premier mode de réalisation d'une infrastructure de gestion de clé publique selon l'invention,
la figure 3 représente schématiquement les échanges à l'intérieur de l'infrastructure de la figure 2 pour requérir un certificat,
la figure 4 représente un deuxième mode de réalisation d'une infrastructure de gestion de clé publique selon l'invention,
la figure 5 représente de manière schématique les échanges nécessaires pour l'obtention d'un certificat à l'aide de l'infrastructure de la figure 4.

La figure 2 représente un premier mode de réalisation d'une infrastructure de gestion de clé publique selon l'invention. Cette infrastructure comporte un serveur de certificat 10, un serveur d'enregistrement 20 et un serveur d'identité 30. Lesdits serveurs 10, 20 et 30 sont physiquement distincts et sont reliés entre eux par Internet et communiquent à l'aide d'une liaison sécurisée. Le serveur de certificat 10 matérialise l'autorité de certification. Le serveur de certificat 10, à réception d'une requête de demande de certificat émise en bonne et due forme par le serveur d'enregistrement 20, est apte à calculer une clé publique et une clé privée puis à fournir un certificat contenant la clé publique ainsi que les autres attributs du certificat. Le serveur d'enregistrement 20 matérialise l'autorité d'enregistrement. Le serveur d'enregistrement 20 est apte à recevoir des requêtes de demandés d'enregistrement provenant d'un utilisateur 40, éventuellement par l'intermédiaire d'un terminal 41, lui-même relié à Internet. Le serveur d'enregistrement 20 est apte à aller chercher auprès du serveur d'identité 30 les informations concernant l'identité du demandeur 40. Le serveur d'identité 30 matérialise une autorité de gestion d'identité et contient des informations sur l'identité d'un demandeur de certificat 40. L'interaction entre le serveur d'identité 30 et le demandeur 40 peut se faire par l'intermédiaire d'un terminal 40 via Internet ou de manière directe, soit physiquement, soit par un autre moyen de communication tel que le courrier classique avec le demandeur.

Chaque serveur 10, 20 et 30 est muni d'un programme d'ordinateur pour interagir avec les autres serveurs afin de réaliser le procédé d'obtention de certificat qui va être décrit par la suite. Le programme peut être stocké sur un support d'enregistrement lisible par ordinateur préalablement à la mise en oeuvre sur lesdits serveurs.

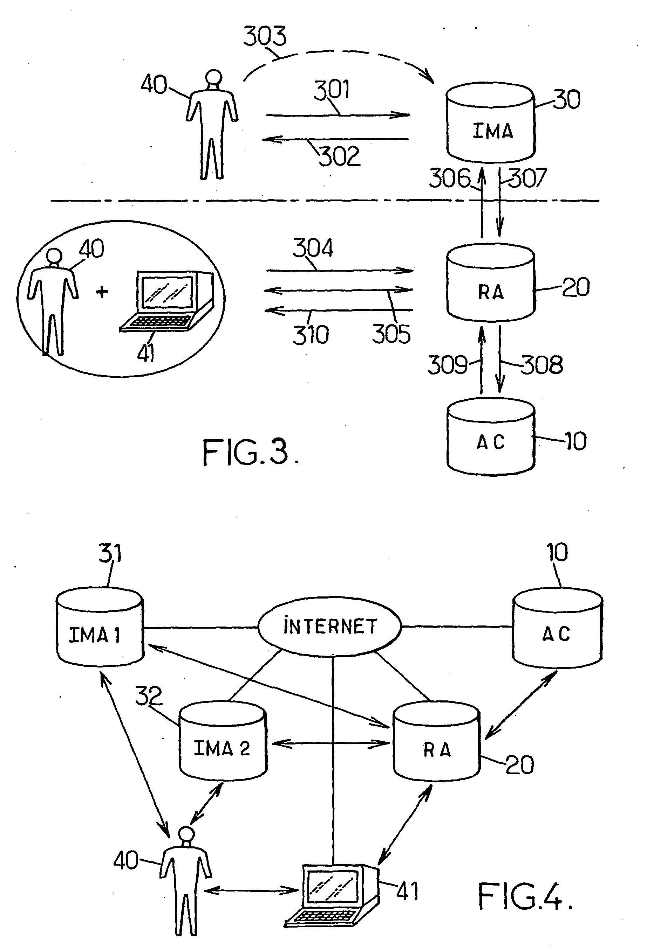

Une demande de certificat selon l'invention est réalisée en deux phases comme montrées sur la figure 3. Pendant une première phase, le demandeur enregistre son identité auprès du serveur d'identité 30. Au cours d'une première étape 301, le demandeur 40 fournit au serveur d'identité des informations concernant son identité, à savoir nom, prénom, et autres. Au cours de cette première étape 301, le demandeur 40 va fournir auprès de l'autorité de gestion d'identité tous les justificatifs nécessaires pour prouver la véracité des informations données afin de les enregistrer dans le serveur d'identité 30. A partir du moment ou un minimum de justificatifs d'identité a été fourni à l'autorité de gestion d'identité, l'identité est enregistrée dans le serveur 30 et celui-ci fournit au demandeur 40 un identifiant anonyme associé aux informations d'identité au cours d'une deuxième étape 302. L'identifiant permet d'accéder aux informations d'identité dans le serveur d'identité. Si l'enregistrement complet des informations d'identité n'a pu se faire au cours de l'étape 301, le demandeur peut au cours d'une troisième étape 303, fournir des justificatifs complémentaires à l'autorité de gestion d'identité qui enregistrera dans le serveur d'identité les informations complémentaires après les avoir vérifiées.

Sur les figures 2 et 3, il est représenté un unique serveur d'identité 30, il est à noter que l'autorité de gestion d'identité comporte en plus du serveur d'identité 30 des moyens d'interface avec le demandeur 40. Ces moyens d'interface sont, par exemple un opérateur physique situé dans une agence, soit à proximité du serveur, soit une agence distante reliée audit serveur par Internet via une liaison sécurisée. Il est à noter que le demandeur 40 peut fournir les informations et justificatifs de son identité en une étape 301 ou en deux étapes 301 et 303. Lorsque l'identité et les justificatifs d'identité sont fournis en deux ou plusieurs étapes, le demandeur peut s'adresser à une ou plusieurs agences reliées audit serveur d'identité 30.

Une fois que le serveur d'identité 30 est correctement renseigné sur l'identité, le demandeur 40 va pouvoir demander des certificats auprès de l'infrastructure de gestion de clé publique par l'intermédiaire d'un terminal 41, la première phase est alors terminée.

Une deuxième phase correspondant à la requête de certificat peut alors commencer. Au cours d'une étape 304, le demandeur envoie au serveur d'enregistrement 20 une requête de demande de certificat. Pendant une étape 305, le serveur d'enregistrement va, entre autre, demander de justifier de son identité au demandeur. En réponse à cette requête d'identité, le demandeur se contente d'envoyer son identifiant audit serveur d'enregistrement 20.

A réception de l'identifiant, le serveur d'enregistrement 20 va demander, au cours d'une étape 306, au serveur d'identité 30 de lui envoyer les informations certifiées correspondant audit identifiant. Au cours d'une étape 307 et après avoir contrôlé la validité de l'identifiant, le serveur d'identité 30 fournit au serveur d'enregistrement 20 les informations présentes dans sa base de données qui sont associées audit identifiant et relatives à l'identité du demandeur 40.

A réception des informations d'identité, et au cours d'une étape 307, le serveur d'enregistrement 20 envoie une requête complète de demande de certificat au serveur de certificat 10. Le serveur de certificat 10 va alors calculer une clé publique et une clé privée et établir un certificat correspondant pour le demandeur 40. Le certificat et la clé privée sont ensuite transmis au cours d'une étape 309 au serveur d'enregistrement 20. Le serveur d'enregistrement 20 fournit au demandeur le certificat et la clé privée au cours d'une étape 310.

Il est à noter que les informations échangées, d'une part, entre le terminal 41 et le serveur d'enregistrement 20 et, d'autre part, entre les trois serveurs 10, 20 et 30 se font par l'intermédiaire d'Internet à l'aide d'un protocole sécurisé, par exemple le protocole connu sous l'appellation HTTPS ou HTTP (de l'anglais HyperText Transfer Protocol) avec SSL (de l'anglais Secure Socket Layer).

L'intérêt d'une telle infrastructure de gestion de clé publique ainsi que du procédé d'attribution de certificat, provient du fait que l'identité, une fois stockée dans le serveur d'identité 30, peut être utilisée par une pluralité de serveur d'enregistrement 20 et que cet enregistrement d'identité se fait une seule et unique fois.

L'identifiant fournit au demandeur 40 par le serveur d'identité 30 peut être de différents types. Selon un premier mode de réalisation, l'identifiant peut être un simple mot de passe permettant d'accéder aux informations d'identité contenues dans le serveur 30. Le mot de passe est alors fourni de manière sécurisée au serveur d'enregistrement 20 qui va ensuite le fournir au serveur d'identité 30. En réponse audit mot de passe, le serveur d'identité 30 va fournir les informations d'identité correspondant à l'identifiant.

Selon une variante plus sécurisée, l'identifiant peut lui-même être un certificat. Ainsi, des informations relatives à l'identité du demandeur sont renseignées dans les champs d'un formulaire fourni au demandeur 40 par le serveur d'enregistrement. Les champs sont ensuite signés à l'aide de la clé privée associée au, certificat de l'identifiant. Le formulaire ainsi signé est ensuite envoyé par le serveur d'enregistrement 20 au serveur d'identité 30. Le serveur d'identité 30 vérifie la signature du formulaire à l'aide de sa clé publique et si celle-ci est vérifiée, il fournit alors au serveur d'enregistrement 20 les informations d'identité dudit formulaire en les certifiant, et en ajoutant éventuellement des informations d'identité complémentaires non présentes sur le formulaire.

Le certificat peut également être un certificat non personnel ou anonyme contenu dans une carte à puce accompagnée de son code PIN.

Les informations d'identité relatives à une personne peuvent être relativement nombreuses. On a cité précédemment le nom et le prénom. A ces informations d'identité de base peuvent s'ajouter d'autres informations d'identité complémentaires telles que date et lieu de naissance, nationalité, sexe, mais aussi des informations biométriques ou des informations, par exemple relatives au compte bancaire. Il n'est pas nécessaire que toutes ces informations soient fournies pour une demande de certificat donnée. De même, pour une raison de confidentialité, il peut être préféré de ne pas stocker dans un seul et unique serveur toutes ces informations relatives à l'identité d'une personne. Egalement, le stockage de la totalité des informations d'identité relatives à une personne peut nécessiter des moyens relativement importants difficilement gérables par une unique autorité.

A cet effet, une variante de réalisation d'infrastructure selon l'invention est représentée sur la figure 4. Sur cette figure 4, le serveur d'identité 30 est remplacé par deux serveurs d'identité 31 et 32 physiquement distincts et reliés à Internet. Les serveurs d'identité 31 et 32 vont comporter des informations d'identité communes et complémentaires. A titre d'exemple, le serveur d'identité 31 va comporter par exemple le nom et le prénom de la personne accompagnés d'informations biométriques telles qu'empreintes digitales ou signature vocale. Et le serveur d'identité 32 va lui enregistrer des informations plus conventionnelles telles que les informations d'identité civile, nom, prénom, date de naissance, lieu de naissance, nationalité, sexe, numéro de sécurité sociale, numéro de compte en banque, etc. Bien évidemment, pour le serveur 31, il est impératif que la personne se déplace pour la mesure des informations biométriques et que celle-ci justifie de son identité à l'aide d'une pièce d'identité légale. Pour le serveur d'identité 32, toutes ces informations peuvent être fournies de manière postale, à l'aide de justificatifs d'identité conventionnels.

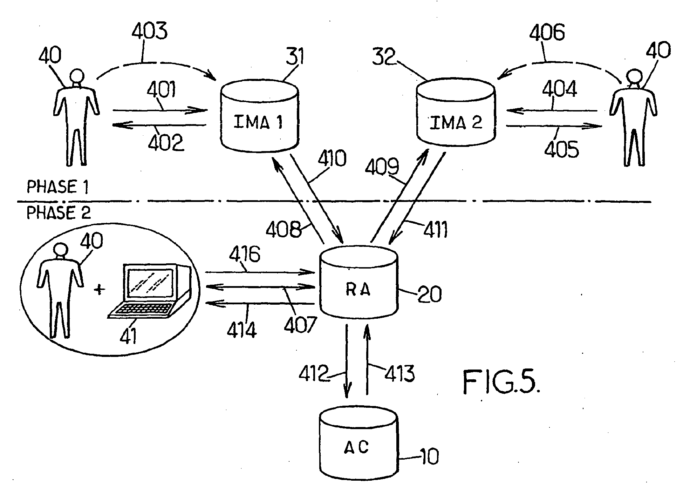

Là encore, une demande de certificat est réalisée en deux phases comme montré sur la figure 5. Au cours de la première phase, le demandeur va renseigner les serveurs 31 et 32 de manière indépendante l'une de l'autre. Ainsi, au cours d'une première étape 401, le demandeur 40 va fournir au serveur 31 des premières informations concernant son identité, par exemple, des informations biométriques. Le demandeur 40 va donc se déplacer dans une agence qui va tout d'abord vérifier son identité en présentant une carte d'identité et enregistrer par exemple ces empreintes digitales ou encore enregistrer une identification vocale. Une fois ces informations enregistrées dans ce serveur biométrique, le serveur 31 va fournir un premier identifiant au cours de l'étape 402. Si par hasard, le demandeur 40 désire modifier ou enregistrer de nouvelles informations biométriques, il peut toujours le faire au cours d'une étape 403 en fournissant simultanément son identifiant avec les données des informations supplémentaires en se déplaçant également auprès de l'autorité de gestion d'identité associée au serveur 31.

Toujours au cours de la première phase, le demandeur 40 va également faire le nécessaire pour enregistrer son identité auprès du serveur 32. Au cours d'une étape 404, il va fournir des informations accompagnées de papiers justificatifs de son identité, par exemple sa carte d'identité ainsi que tous les papiers permettant de prouver que son domicile est bien réel, etc. Les différentes informations étant vérifiées par une personne lors de l'enregistrement dans le serveur 32, un deuxième identifiant est fourni au demandeur 40 au cours de l'étape 405. Là encore, si le demandeur souhaite enregistrer d'autres informations concernant son identité, par exemple son compte en banque ou éventuellement son numéro de sécurité sociale, il peut toujours au cours d'une étape 406 les fournir avec les justificatifs nécessaires accompagnés de son identifiant.

Une fois les différentes informations relatives à son identité enregistrées auprès des serveurs 31 et 32, le demandeur 40 peut alors demander au serveur d'enregistrement 20 de lui attribuer un certificat par l'intermédiaire d'un terminal 41 connecté à Internet. La requête est envoyée au cours d'une étape 416. Au cours d'une étape 407, le serveur d'enregistrement et le demandeur vont dialoguer afin de remplir les formulaires requis par le serveur d'enregistrement pour une demande de certificat et de fournir au serveur d'enregistrement 20 les premier et deuxième identifiants correspondants respectivement aux serveurs 31 et 32. Une fois que le serveur d'enregistrement a récupéré les identifiants, il va simultanément les envoyer aux serveurs d'identité 31 et 32 au cours d'étapes 408 et 409. Les étapes 408 et 409 sont quasi simultanées et il n'est pas besoin au serveur d'enregistrement d'attendre la réponse des serveurs d'identité avant d'envoyer l'identifiant suivant. En réponse à l'identifiant reçu au cours de l'étape 408, le serveur d'identité 31 va vérifier ce premier identifiant et envoyer les informations d'identité certifiées au cours d'une étape 410. Après avoir reçu le deuxième identifiant au cours de l'étape 409, le serveur d'identité 32 va vérifier cet identifiant et fournir en retour les informations d'identité complémentaires au cours d'une étape 411. Ensuite, le serveur d'enregistrement va compiler les différentes informations d'identité reçues dans un unique formulaire à destination du serveur de certificat 10. Les informations provenant du serveur 31 et celles provenant du serveur 32 sont mises dans un unique formulaire. Au cours d'une étape 412, le serveur d'enregistrement envoie la requête dûment complétée et contenant les informations d'identité du demandeur 40 au serveur de certificat 10. Celui-ci en retour calcule une clé publique et une clé secrète et établit un certificat qu'il envoie au serveur d'enregistrement au cours d'une étape 413. Le certificat est ensuite délivré par le serveur d'enregistrement au demandeur 40 au cours d'une étape 414.

Il est à noter que le serveur d'enregistrement peut se contenter de demander au serveur d'identité 31 ou 32 qu'un nombre limité d'informations relative à l'identité par rapport aux informations contenues dans lesdits serveurs. En effet, le serveur 31 comporte des informations biométriques, par exemple empreintes digitales et signature vocale, alors que la demande d'informations d'identité peut ne concerner que la signature vocale, il n'est donc pas nécessaire de transférer des informations relatives aux empreintes digitales.

Dans les exemples décrits, le demandeur 40 fournit l'identifiant au serveur d'enregistrement 20 qui interroge le serveur d'identité 30 pour obtenir les informations d'identité du demandeur. Selon une variante, il est possible que le demandeur 40 interroge directement le serveur d'identité 30 pour que celui-ci fournisse les informations d'identité au serveur d'enregistrement 20. Egalement, il est possible que l'identité soit fournie au demandeur par le serveur d'identité 30 sous forme d'un certificat. Le demandeur peut alors produire le certificat au serveur d'enregistrement 20 qui se contente de vérifier la validité du certificat auprès du serveur d'identité.

Dans les exemples décrits, le certificat et la clé privée associée fournis par le serveur de certificat 10 au demandeur 40 transitent par le serveur d'enregistrement 20. Il est tout à fait possible de délivrer le certificat et la clé privée au demandeur 40 sans passer par le serveur d'enregistrement 20.

## Revendications

1. Procédé d'attribution de certificat électronique dans une infrastructure d'attribution de certificat distribuée dans un réseau, l'infrastructure incluant au moins un serveur de certificat (10), un serveur d'identité (30, 31, 32) et un serveur d'enregistrement (20) reliés au réseau,
dans lequel, préalablement à une requête (304, 306) de demande de certificat, des informations relatives à l'identité d'un demandeur (40) de certificat sont stockées dans le serveur d'identité (30), les informations d'identité étant accessibles par l'intermédiaire d'un identifiant,
et dans lequel :
- un demandeur (40) requiert (304, 306) un certificat auprès du serveur d'enregistrement (20),
- l'identifiant est envoyé (306, 408, 409) au serveur d'identité (30, 31, 32),
- après vérification de l'identifiant, le serveur d'identité (30, 31, 32) envoie (307, 410, 411) l'identité préalablement enregistrée du demandeur (40), ladite identité étant fournie au serveur d'enregistrement (20),
- après réception de l'identité, le serveur d'enregistrement (20) envoie (308, 413) une requête de certificat incluant l'identité du demandeur au serveur de certificat (10), et
- le serveur de certificat (10) envoie le certificat à destination du demandeur (40).

2. Procédé selon la revendication 1, dans lequel :
- le serveur d'enregistrement (20) demande (305, 407) au demandeur (40) son identifiant, afin de l'envoyer (306, 408, 409) au serveur d'identité (30, 31, 32), et
- après vérification de l'identifiant, le serveur d'identité (30, 31, 32) envoie (307, 410, 411) au serveur d'enregistrement (20) l'identité préalablement enregistrée du demandeur (40) au serveur d'enregistrement (20).

3. Procédé selon l'une des revendications 1 ou 2, dans lequel :
- le serveur de certificat (10) envoie (309, 412) le certificat au serveur d'enregistrement (20), et
- le serveur d'enregistrement (20) fournit (310, 414) le certificat au demandeur (40).

4. Procédé selon l'une des revendications 1 à 3, dans lequel l'identifiant est un identifiant anonyme.

5. Procédé selon l'une des revendications 1 à 4, dans lequel l'identifiant est accompagné d'un moyen de vérification.

6. Procédé selon la revendication 5, dans lequel:
- le moyen de vérification est fourni par le demandeur (40) au serveur d'enregistrement (20) qui le fournit au serveur d'identité (30), et
- le serveur d'identité (30) renvoie l'identité au serveur d'enregistrement uniquement si le moyen de vérification valide l'identifiant.

7. Procédé selon la revendication 5, dans lequel le moyen de vérification est un certificat vérifié par le serveur d'enregistrement.

8. Procédé selon l'une des revendications 1 à 7, dans lequel plusieurs serveurs d'identité (31, 32) sont reliés au réseau, chaque serveur comportant des informations d'identité complémentaires enregistrées préalablement à une requête de demande de certificat, les informations d'identité étant accessibles par l'intermédiaire d'un identifiant propre à chaque serveur d'identité,
et dans lequel le serveur d'enregistrement (20) récupère (410, 411) les informations d'identité des différents serveurs d'identité afin de reconstituer une identité complète avant de l'envoyer au serveur de certificat (10).

9. Procédé selon l'une des revendications 1 à 8, dans lequel les échanges d'informations entre le demandeur et le serveur d'enregistrement se font par l'intermédiaire du réseau.

10. Procédé selon l'une des revendications 1 à 9, dans lequel l'identifiant est lui-même un certificat.

11. Produit programme d'ordinateur comprenant des instructions pour mettre en oeuvre le procédé selon l'une des revendications 1 à 10 lors d'une exécution par des moyens de traitement mettant en oeuvre le procédé.

12. Support d'enregistrement lisible par ordinateur **caractérisé en ce qu'**il comporte un programme d'ordinateur mettant en oeuvre le procédé selon l'une des revendications 1 à 10 lorsque ledit programme est exécuté par des moyens de traitement mettant en oeuvre le procédé.

13. Infrastructure d'attribution de certificat sur un réseau informatique, **caractérisé en ce qu'**elle comporte au moins :
- un serveur de certificat (10) d'authentification relié au réseau et apte à fournir un certificat électronique pour un demandeur (40), pour une durée donnée et pour un objet défini, le certificat étant délivré après la réception d'une identité d'un demandeur ;
- un serveur d'identité (30, 31, 32) relié au réseau, le serveur d'identité (30, 31, 32) contenant des informations relatives à l'identité d'un demandeur (40) de certificat, le serveur d'identité (30, 31, 32) étant apte à fournir, après réception d'un identifiant, l'identité préalablement enregistrée du demandeur ;
- un serveur d'enregistrement relié au réseau et apte à requérir les informations d'identité relatives au demandeur (40) auprès du serveur d'identité (30), suite à une requête de certificat d'un demandeur (40), puis à envoyer une requête de certificat (10) au serveur de certificat incluant les informations d'identité du demandeur.

14. Infrastructure selon la revendication 13, dans laquelle l'identifiant est un identifiant anonyme.

15. Infrastructure selon l'une des revendications 13 ou 14, dans laquelle le serveur d'identité (30, 31, 32) est apte à vérifier la validité de l'identifiant afin de renvoyer l'identité au serveur d'enregistrement uniquement si l'identifiant est valide.

16. Infrastructure selon l'une des revendications 13 à 15, dans laquelle plusieurs serveurs d'identités (31, 32) sont reliés au réseau, chaque serveur comportant des informations d'identité complémentaires enregistrées préalablement à une requête de demande de certificat, les informations d'identité étant accessible par l'intermédiaire d'un identifiant propre à chaque serveur d'identité,
et dans laquelle le serveur d'enregistrement (20) est apte à récupérer les informations d'identité des différents serveurs d'identité (31, 32) afin de reconstituer une identité complète avant de l'envoyer au serveur de certificat.

17. Infrastructure selon l'une des revendications 13 à 16, comportant en outre un terminal d'accès (41) relié au réseau, le terminal d'accès (41) étant apte à communiquer avec le serveur d'enregistrement (20) afin de servir d'interface au demandeur (40).

18. Infrastructure selon l'une des revendications 13 à 17, dans laquelle l'identifiant est un certificat.

## Claims

1. Method of electronic certificate assignment in a certificate assignment infrastructure distributed in a network, the infrastructure including at least one certificate server (10), an identity server (30, 31, 32) and a registration server (20) linked to the network,
in which, prior to a certificate application request (304, 306), information relating to the identity of a certificate applicant (40) is stored in the identity server (30), the identity information being accessible by way of an identifier,
and in which:
- an applicant (40) requests (304, 306) a certificate from the registration server (20),
- the identifier is dispatched (306, 408, 409) to the identity server (30, 31, 32),
- after verification of the identifier, the identity server (30, 31, 32) dispatches (307, 410, 411) the previously registered identity of the applicant (40), said identity being provided to the registration server (20),
- after receipt of the identity, the registration server (20) dispatches (308, 413) a certificate request including the identity of the applicant to the certificate server (10), and
- the certificate server (10) dispatches the certificate to the applicant (40).

2. Method according to claim 1, in which:
- the registration server (20) asks (305, 407) the applicant (40) for his identifier, so as to dispatch it (306, 408, 409) to the identity server (30, 31, 32), and
- after verification of the identifier, the identity server (30, 31, 32) dispatches (307, 410, 411) to the registration server (20) the previously registered identity of the applicant (40) at the registration server (20).

3. Method according to one of Claims 1 or 2, in which:
- the certificate server (10) dispatches (309, 412) the certificate to the registration server (20), and
- the registration server (20) provides (310, 414) the certificate to the applicant (40).

4. Method according to one of Claims 1 to 3, in which the identifier is an anonymous identifier.

5. Method according to one of Claims 1 to 4, in which the identifier is accompanied by a verification means.

6. Method according to Claim 5, in which:
- the verification means is provided by the applicant (40) to the registration server (20) which provides it to the identity server (30), and
- the identity server (30) returns the identity to the registration server only if the verification means validates the identifier.

7. Method according to Claim 5, in which the verification means is a certificate verified by the registration server.

8. Method according to one of Claims 1 to 7, in which several identity servers (31, 32) are linked to the network, each server comprising complementary identity information registered prior to a certificate application request, the identity information being accessible by way of an identifier specific to each identity server,
and in which the registration server (20) retrieves (410, 411) the identity information from the various identity servers so as to reconstitute a complete identity before dispatching it to the certificate server (10).

9. Method according to one of Claims 1 to 8, in which the information exchanges between the applicant and the registration server are done by way of the network.

10. Method according to one of Claims 1 to 9, in which the identifier is itself a certificate.

11. Computer program product comprising instructions for implementing the method according to one of claims 1 to 10 during execution by processing means implementing the method.

12. Computer readable recording medium **characterized in that** it comprises a computer program implementing the method according to one of Claims 1 to 10 when said program is executed by processing means implementing the method.

13. Infrastructure for certificate assignment on a computer network, **characterized in that** it comprises at least:
- an authentication certificate server (10) linked to the network and able to provide an electronic certificate for an applicant (40), for a given duration and for a defined object, the certificate being delivered after the receipt of an identity of an applicant;
- an identity server (30, 31, 32) linked to the network, the identity server (30, 31, 32) containing information relating to the identity of a certificate applicant (40), the identity server (30, 31, 32) being able to provide, after receipt of an identifier, the previously registered identity of the applicant;
- a registration server linked to the network and able to request the identity information relating to the applicant (40) from the identity server (30), following a certificate request from an applicant (40), then to dispatch a certificate request (10) to the certificate server including the applicant's identity information.

14. Infrastructure according to Claim 13, in which the identifier is an anonymous identifier.

15. Infrastructure according to one of Claims 13 or 14, in which the identity server (30, 31, 32) is able to verify the validity of the identifier so as to return the identity to the registration server only if the identifier is valid.

16. Infrastructure according to one of Claims 13 to 15, in which several identity servers (31, 32) are linked to the network, each server comprising complementary identity information registered prior to a certificate application request, the identity information being accessible by way of an identifier specific to each identity server,
and in which the registration server (20) is able to retrieve the identity information from the various identity servers (31, 32) so as to reconstitute a complete identity before dispatching it to the certificate server.

17. Infrastructure according to one of Claims 13 to 16, furthermore comprising an access terminal (41) linked to the network, the access terminal (41) being able to communicate with the registration server (20) so as to serve as interface for the applicant (40).

18. Infrastructure according to one of Claims 13 to 17, in which the identifier is a certificate.

## Patentansprüche

1. Verfahren zur Vergabe eines elektronischen Zertifikats in einer in einem Netz verteilten Zertifikatvergabe-Infrastruktur, wobei die Infrastruktur mindestens einen Zertifikatserver (10), einen Identitätsserver (30, 31, 32) und einen Registrierungsserver (20) umfasst, die mit dem Netz verbunden sind,
wobei vor einer Anforderung (304, 306) eines Zertifikatantrags Informationen bezüglich der Identität eines Zertifikatantragstellers (40) in dem Identitätsserver (30) gespeichert werden,
wobei die Identitätsinformationen über eine Kennung zugänglich sind,
und wobei:
- ein Antragsteller (40) ein Zertifikat beim Registrierungsserver (20) anfordert (304, 306),
- die Kennung an den Identitätsserver (30, 31, 32) gesendet wird (306, 408, 409),
- nach Überprüfung der Kennung der Identitätsserver (30, 31, 32) die vorher registrierte Identität des Antragstellers (40) sendet (307, 410, 411), wobei die Identität an den Registrierungsserver (20) geliefert wird,
- nach Empfang der Identität der Registrierungsserver (20) eine Zertifikatanforderung, die die Identität des Antragstellers enthält, an den Zertifikatserver (10) sendet (308, 413), und
- der Zertifikatserver (10) das Zertifikat an den Antragsteller (40) sendet.

2. Verfahren nach Anspruch 1, bei dem:
- der Registrierungsserver (20) vom Antragsteller (40) seine Kennung verlangt (305, 407), um sie an den Identitätsserver (30, 31, 32) zu senden (306, 408, 409), und
- nach Überprüfung der Kennung der Identitätsserver (30, 31, 32) die vorher registrierte Identität des Antragstellers (40) an den Registrierungsserver (20) sendet (307, 410, 411).

3. Verfahren nach einem der Ansprüche 1 oder 2, bei dem:
- der Zertifikatserver (10) das Zertifikat an den Registrierungsserver (20) sendet (309, 412), und
- der Registrierungsserver (20) das Zertifikat an den Antragsteller (40) liefert (310, 414).

4. Verfahren nach einem der Ansprüche 1 bis 3, bei dem die Kennung eine anonyme Kennung ist.

5. Verfahren nach einem der Ansprüche 1 bis 4, bei dem die Kennung von einem Überprüfungsmittel begleitet wird.

6. Verfahren nach Anspruch 5, bei dem:
- das Überprüfungsmittel vom Antragsteller (40) an den Registrierungsserver (20) geliefert wird, der es an den Identitätsserver (30) liefert, und
- der Identitätsserver (30) die Identität an den Registrierungsserver nur dann zurücksendet, wenn das Überprüfungsmittel die Kennung validiert.

7. Verfahren nach Anspruch 5, bei dem das Überprüfungsmittel ein Zertifikat ist, das vom Registrierungsserver überprüft wird.

8. Verfahren nach einem der Ansprüche 1 bis 7, bei dem mehrere Identitätsserver (31, 32) mit dem Netz verbunden sind, wobei jeder Server komplementäre Identitätsinformationen aufweist, die vor einer Zertifikatantrag-Anforderung registriert wurden, wobei die Identitätsinformationen über eine Kennung zugänglich sind, die jedem Identitätsserver eigen ist,
und bei dem der Registrierungsserver (20) die Identitätsinformationen der verschiedenen Identitätsserver sammelt (410, 411), um eine komplette Identität wiederherzustellen, ehe er sie an den Zertifikatserver (10) sendet.

9. Verfahren nach einem der Ansprüche 1 bis 8, bei dem die Informations-Austauschvorgänge zwischen dem Antragsteller und dem Registrierungsserver über das Netz erfolgen.

10. Verfahren nach einem der Ansprüche 1 bis 9, bei dem die Kennung selbst ein Zertifikat ist.

11. Computerprogrammprodukt, das Anweisungen enthält, um das Verfahren nach einem der Ansprüche 1 bis 10 bei einer Ausführung durch Verarbeitungsmittel anzuwenden, die das Verfahren anwenden.

12. Computerlesbarer Aufzeichnungsträger, **dadurch gekennzeichnet, dass** er ein Computerprogramm aufweist, das das Verfahren nach einem der Ansprüche 1 bis 10 anwendet, wenn das Programm von Verarbeitungsmitteln ausgeführt wird, die das Verfahren anwenden.

13. Zertifikatvergabe-Infrastruktur auf einem Informatiknetz, **dadurch gekennzeichnet, dass** sie mindestens aufweist:
- einen Authentifizierungs-Zertifikatserver (10), der mit dem Netz verbunden und fähig ist, ein elektronisches Zertifikat für einen Antragsteller (40) für eine gegebene Dauer und für ein definiertes Objekt zu liefern, wobei das Zertifikat nach dem Empfang einer Identität eines Antragstellers geliefert wird;
- einen mit dem Netz verbundenen Identitätsserver (30, 31, 32), wobei der Identitätsserver (30, 31, 32) Informationen bezüglich der Identität eines Zertifikatantragstellers (40) enthält,
wobei der Identitätsserver (30, 31, 32) fähig ist, nach Empfang einer Kennung die vorher registrierte Identität des Antragstellers zu liefern;
- einen Registrierungsserver, der mit dem Netz verbunden und fähig ist, nach einer Zertifikat-Anforderung eines Antragstellers (40) die Identitätsinformationen bezüglich des Antragstellers (40) beim Identitätsserver (30) anzufordern, dann eine Zertifikat-Anforderung (10) an den Zertifikatserver zu senden, die die Identitätsinformationen des Antragstellers enthält.

14. Infrastruktur nach Anspruch 13, bei der die Kennung eine anonyme Kennung ist.

15. Infrastruktur nach einem der Ansprüche 13 oder 14, bei der der Identitätsserver (30, 31, 32) fähig ist, die Gültigkeit der Kennung zu überprüfen, um die Identität nur dann an den Registrierungsserver zurückzusenden, wenn die Kennung gültig ist.

16. Infrastruktur nach einem der Ansprüche 13 bis 15, bei der mehrere Identitätsserver (31, 32) mit dem Netz verbunden sind, wobei jeder Server komplementäre Identitätsinformationen enthält, die vor einer Zertifikatantrag-Anforderung registriert wurden, wobei die Identitätsinformationen über eine Kennung zugänglich sind, die jedem Identitätsserver eigen ist, und bei der der Registrierungsserver (20) fähig ist, die Identitätsinformationen der verschiedenen Identitätsserver (31, 32) zu sammeln, um eine komplette Identität wiederherzustellen, ehe sie an den Zertifikatserver gesendet wird.

17. Infrastruktur nach einem der Ansprüche 13 bis 16, die außerdem ein mit dem Netz verbundenes Zugangsendgerät (41) aufweist, wobei das Zugangsendgerät (41) fähig ist, mit dem Registrierungsserver (20) zu kommunizieren, um als Schnittstelle für den Antragsteller (40) zu dienen.

18. Infrastruktur nach einem der Ansprüche 13 bis 17, bei der die Kennung ein Zertifikat ist.
